(19) Europäisches Patentamt
European Patent Office
Office européen des brevets

(11) Veröffentlichungsnummer : **0 088 988**
**B1**

(12) **EUROPÄISCHE PATENTSCHRIFT**

(45) Veröffentlichungstag der Patentschrift : **07.05.86**

(51) Int. Cl.[4] : **C 01 C 3/02**, C 01 F 7/00

(21) Anmeldenummer : **83102261.1**

(22) Anmeldetag : **08.03.83**

(54) **Verfahren zur Herstellung von Cyanwasserstoff unter gleichzeitiger Bildung von Aluminiumnitrid.**

(30) Priorität : **11.03.82 DE 3208774**

(43) Veröffentlichungstag der Anmeldung : **21.09.83 Patentblatt 83/38**

(45) Bekanntmachung des Hinweises auf die Patenterteilung : **07.05.86 Patentblatt 86/19**

(84) Benannte Vertragsstaaten : **BE DE FR GB IT NL**

(56) Entgegenhaltungen :
**DE-C- 1 026 288**
**DE-C- 1 068 681**
**DE-C- 1 153 734**
**FR-A- 1 150 378**
**US-A- 3 577 218**

(73) Patentinhaber : **Louis, Gerd, Dr.**
**Karl-Meyer-Strasse 23**
**D-4300 Essen 12 (DE)**

**Hillebrand, Wolfgang, Dr.**
**Westendorfstrasse 6**
**D-4600 Dortmund 41 (DE)**

(72) Erfinder : **Louis, Gerd, Dr.**
**Karl-Meyer-Strasse 23**
**D-4300 Essen 12 (DE)**
Erfinder : **Hillebrand, Wolfgang, Dr.**
**Westendorfstrasse 6**
**D-4600 Dortmund 41 (DE)**

(74) Vertreter : **Frühbuss, Heinrich, Dr.rer.nat.**
**Hubert-Reissner-Strasse 5a**
**D-8032 Gräfelfing b. München (DE)**

**EP 0 088 988 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur Herstellung von Cyanwasserstoff aus Ammoniak und Kohlenwasserstoffen wie z. B. Methan, sowie die Herstellung von Aluminiumnitrid.

Bei den heutigen großtechnischen Verfahren zur Synthese von HCN werden Methan und Ammoniak an Platinkatalysatoren bei etwa 900 bis 1 300 °C umgesetzt. Diese Katalysatoren sind empfindlich gegenüber jeder Art von Katalysatorgiften, wie z. B. schwefelhaltigen, gasförmigen Verbindungen.

Es ist bekannt, Ammoniak mit Methan in einem Reaktionsrohr aus Sintertonerde mit einer Temperatur der äußeren Oberfläche von 1 250 °C oder in einem innenplatinierten Tonerderohr mit einer äußeren Oberfläche von 1 150 °C zu HCN umzusetzen (vergl. DE-B-1 026 288). Da das Ammoniak an tonerdehaltigen Oberflächen und das Methan an platinhaltigen Oberflächen stärker aktiviert werden, muß zur Erzielung befriedigender Ausbeuten mit entsprechend großen Überschüssen gearbeitet werden.

Es ist schließlich bekannt, durch Zudosieren von Schwefelkohlenstoff zum Gasgemisch aus $CH_4$ und $NH_3$ mittels eines $Al_2O_3$-$ThO_2$ Katalysators bei 1 050 °C eine Ausbeutesteigerung an HCN von 60 auf 80 % (bezogen auf eingesetztes Ammoniak) zu erzielen (J. Chem. Soc. Jap. 59, 1956 ; 121-4). Auch bei dieser Reaktion muß mit einem großen Überschuß an Methan gearbeitet werden, was zu einer baldigen Desaktivierung des Katalysators infolge von Rußabscheidungen führt.

Aus der DE-PS 1 153 734 ist bekannt, dass γ-Aluminiumoxyd ein wirksamer Katalysator für die Umsetzung von Kohlenwasserstoffen mit Ammoniak in Gegenwart von Sauerstoff zu Cyanwasserstoff ist. Eine Umwandlung des Aluminiumoxyds zu Aluminiumnitrid findet hierbei nicht statt.

Aus der DE-PS 1 068 681 ist bekannt, dass Aluminiumoxyd-Katalysatoren durch Reaktion von Kohlenstoff oder Stickstoff unter Bildung von Aluminiumnitrid strukturell verändert wird und dadurch in seinen katalytischen Eingenschaften weit hinter Aluminiumoxyd zurückbleibt. Das Verfahren benötigt einen hohen Ammoniaküberschuss im Ausgangsgas.

Aus Gmelins Handbuch der anorganischen Chemie, Band Kohlenstoff, Teil D 1, 1971, Seite 140 ist bekannt, dass durch Leiten eines Gasgemisches aus Naturgas mit etwa 91 % $CH_4$ (220 $cm^3$/min.) und $NH_3$ (100 $cm^3$/min.) bei 1 050 °C über $Al_2O_3$-$ThO_2$-Katalysator 60 bis 80 %, mit $Al_2O_3$-$SiO_2$-Katalysator maximal 70 % Ausbeute an HCN erzielt wird. Zusatz von $CS_2$ oder $H_2S$ erhöht die HCN-Ausbeute. Danach war nicht zu erwarten, dass reines γ-$Al_2O_3$ als Katalysator in Gegenwart schwefelhaltiger Verbindungen seine Aktivität behält und vollständig in AlN umgewandelt wird, was bei den vorgenannten Mischkatalysatoren ohnehin nicht möglich ist.

Der Erfindung liegt die Aufgabe zugrunde, die Reaktion von $NH_3$ mit Kohlenwasserstoffen zu HCN durchzuführen, ohne dass eine alsbaldige Vergiftung des Katalysators eintritt. Darüberhinaus zeigt die Erfindung einen neuen Weg zur Herstellung von AlN auf.

Diese Aufgaben wurden erfindungsgemäß durch die Maßnahmen des kennzeichnenden Teiles des Hauptanspruches gelöst. Man erhält alsdann aus Kohlenwasserstoffen wie Methan, Ethan, Propan, Butan einerseits und Ammoniak andererseits in einem Temperaturbereich von 900 bis 1 300 °C und bei einer S-Konzentration zwischen 1 bis 15 Vol.-% bis zu 90 %ige Ausbeuten an HCN (bezogen auf das eingesetzte Ammoniak).

Wenngleich die Reaktion innerhalb eines weiten Temperaturbereiches erfolgreich abläuft, liegt die günstigste Temperatur zwischen 900 und 1 100 °C und damit um ca. 100 °C niedriger als bei dem vergleichbaren Verfahren, welches mit Platinkatalysatoren arbeitet. Die Anwendung eines Überschusses an z. B. $CH_4$ ist nicht erforderlich, so daß die gefürchteten Rußabscheidungen gänzlich vermieden werden.

Wie gesagt, kann die schwefelhaltige Verbindung in Mengen bis zu 1 bis 15 Vol.-% zugesetzt werden, gute Ergebnisse werden bereits bei Zugaben von 2 bis 5 Vol.-% erzielt.

Überraschenderweise bildet sich bei der Durchführung des erfindungsgemäßen Verfahrens in Sito ein abgewandelter Katalysator, der im wesentlichen aus AlN besteht. Obwohl nach dem bisherigen Kenntnisstand diese Umwandlung erst bei weit höheren Temperaturen, oberhalb 1 300 °C, durch Reaktion von $Al_2O_3$ mit Stickstoff und Kohlenstoff, entsprechend der folgenden Reaktion

$$Al_2O_3 + N_2 + 3\ C \longrightarrow 2\ AlN + 3\ CO$$

verläuft, findet diese Umwandlung bei dem erfindungsgemäßen Verfahren bereits bei wesentlich niedrigeren Temperaturen statt.

Bemerkenswert dürfte sein, daß reines γ-$Al_2O_3$ nur zu sehr geringen HCN-Ausbeuten führt und die Aktivität dieses Katalysators sogar allmählich nachläßt. Erst durch Zudosierung von schwefelhaltigen Verbindungen erfolgt eine rasche Ausbeutesteigerung unter Umwandlung von γ-$Al_2O_3$ in AlN, ohne daß die gefürchtete Desaktivierung des Katalysators eintritt. Dessen ungeachtet muß für die weitere erfolgreiche Verfahrensdurchführung die dosierte Zugabe von einer S-Verbindung stets beibehalten werden.

Mit Hilfe des erfindungsgemäßen Verfahrens wird die Rohstoffbasis für die HCN-Synthese wesentlich erweitert. So können z. B. Kokereigas, Raffineriegase, Gase aus der Kohlehydrierung als Kohlenwasserstoffquellen dienen und gleichfalls, anstelle von reinem $NH_3$, das wohlfeile Kokereiammoniak, das von Hause aus bereits stark mit $H_2S$ verunreinigt ist.

Die nachfolgenden Ergebnisse wurden dadurch erzielt, daß Kohlenwasserstoffgase, wie Methan, Ethan, Propan oder Butan, entweder in reiner Form oder gemeinsam mit Wasserstoff, mit der entsprechenden stöchiometrischen Mengen an Ammoniak und unterschiedlichen Mengen an schwefelhaltigen Verbindungen vermischt und durch eine Schüttung von 100 ml $\gamma$-$Al_2O_3$-Katalysator geleitet wurden. Diese Schüttung befand sich in einem Keramikrohr, das in einem Röhrenofen auf Temperaturen von 900 bis 1 300 °C, vorzugsweise 900 bis 1 100 °C, erhitzt wurde. Der Katalysator wurde stets vor Beginn des Versuches jeweils zwei Stunden bei 1 000 °C unter Stickstoff vorerhitzt. Es handelte sich um käufliche Katalysatoren aus $\gamma$-$Al_2O_3$ mit einer spezifischen Oberfläche größer als 200 $m^2/g$. Die Produktgase wurden naßchemisch auf HCN und nicht umgesetztes Ammoniak analysiert, die Methankonzentration im Abgas wurde mit Hilfe eines UNOR-Gasanalysators gemessen.

Beispiel 1

50 l/h Methan und 53 l/h Ammoniak wurden bei 1 030 °C über den Katalysator geleitet, wobei 5 Vol.-% $H_2S$ in das Gemisch vor Eintritt in den Katalysator eindosiert wurden.

Die HCN-Ausbeute stieg innerhalb weniger Minuten von 18 % auf 60 % (bezogen auf Ammoniak). Nach weiteren 24 h stieg die Ausbeute auf 80 %, der Katalysator blieb 10 Tage wirksam, sodann wurde der Versuch abgebrochen. Der Katalysator bestand vollständig aus AlN.

Beispiel 2

120 l/h Koksofengas (55,6 % $H_2$, 25,9 % $CH_4$, 3 % höhere Kohlenwasserstoffe) wurden zusammen mit 30 l/h Ammoniak und 21 l/h $H_2S$ bei 1 100 °C über den Katalysator geleitet. Innerhalb von 4 h stieg die Ausbeute von zunächst 22 % auf 88 % HCN, bezogen auf Ammoniak. Der Katalysator behielt seine volle Wirksamkeit während 10 Tagen, dann wurde der Versuch abgebrochen.

Beispiel 3

70 l/h $H_2$, 40 l/h $NH_3$, 11 l/h $CS_2$ und 12 l/h $C_3H_8$ wurden bei 1 020 °C über den Katalysator geleitet. Die Ausbeute an HCN stieg innerhalb von 6 h von 18 % auf 82 %, bezogen auf $NH_3$. Auch nach fünf Tagen war keine Desaktivierung des Katalysators, z. B. durch Kohlenstoff, also Rußabscheidung, festzustellen.

Beispiel 4

50 l/h $CH_4$ und 53 l/h $NH_3$ wurden bei 1 030 °C über $\gamma$-$Al_2O_3$ geleitet. Die HCN-Ausbeute fiel innerhalb von 4 h von 18 auf 13 % (bezogen auf Ammoniak). Etwa 8 % des eingesetzten Methans setzten sich zu Kohlenstoff um. Nach 6 h waren nur geringe Spuren an AlN gebildet, zum Teil hatte sich das $\gamma$-$Al_2O_3$ in $\gamma$-$Al_2O_3$ umgewandelt.

Unter gleichen Bedingungen wurden zusätzlich 10 l/h $H_2S$ dem Gas zudosiert. Die HCN-Ausbeute stieg in wenigen Minuten von 18 % auf 70 % und allmählich weiter auf 78 %. Nach 16 h wurde der Versuch beendet. Auf dem Katalysator war keinerlei Rußabscheidung festzustellen. Die Röntgenanalyse ergab, daß das $Al_2O_3$ vollständig in AlN umgewandelt war.

Beispiel 5

70 l/h $H_2$, 21 l/h $H_2S$, 25 l/h $CH_4$, 5 l/h n-Butan und 45 l/h $NH_3$ wurden bei 1 030 °C über den Katalysator geleitet. Die Ausbeute an HIN stieg innerhalb von 5 Stunden von 79 % auf 89 % (bezogen auf Ammoniak) und blieb danach konstant. Nach 10 Stunden wurde der Versuch abgbrochen. Es hatte sich kein Kohlenstoff auf dem Katalysator gebildet.

Eine kurzzeitige Unterbrechung von 10 Min. der Zugabe von $H_2S$ führte bei ansonsten gleichen Bedingungen zu einer schnellen irreversiblen Desaktivierung des Katalysators infolge starker Kohlenstoffablagerung. Dabei sank die Ausbeute und fiel trotz erneuter Zugabe von $H_2S$ allmählich auf 40 %.

**Patentansprüche**

1. Verfahren zur Herstellung von Cyanwasserstoff durch Umsetzen von Ammoniak mit Kohlenwasserstoffen, wie Methan, bei Temperaturen von 900 bis 1 300 °C an aluminiumhaltigen Katalysatoren, dadurch gekennzeichnet, daß bei gleichzeitiger Bildung von Aluminiumnitrid diese Gase in praktisch stöchiometrischem Verhältnis über $\gamma$-$Al_2O_3$ als Katalysator in Gegenwart einer die Umwandlung dieses Katalysators in Aluminiumnitrid bewirkenden schwefelhaltigen Verbindung geleitet werden.

2. Verfahren nach Anspruch 1, dadurch gekennzeichnet, daß die Reaktion bei 900 bis 1 100 °C durchgeführt wird.

3. Verfahren nach Anspruch 1 bis 2, dadurch gekennzeichnet, dass den Ausgangsgasen die schwefelhaltige Verbindung in Mengen bis zu 15 Vol.-%, bezogen auf Schwefel, zugegeben wird.

4. Verfahren zur Herstellung von Aluminiumnitrid durch Umsetzen von Ammoniak mit Kohlenwasserstoffen, wie Methan, bei Temperaturen von 900 bis 1 300 °C an aluminiumhaltigen Katalysatoren, dadurch gekennzeichnet, dass diese Gase in praktisch stöchiometrischem Verhältnis über γ-$Al_2O_3$ als Katalysator bei den obengenannten Temperaturen, vorzugsweise 900 bis 1 100 °C, in Gegenwart einer schwefelhaltigen Verbindung umgesetzt werden.

**Claims**

1. Process for the production of hydrocyanide by reacting amonia with hydrocarbons f. i. methane at temperatures of between 900° and 1 300 °C using aluminium-containing catalysts for reacting, and consisting in simultaneously forming aluminium nitride by supplying these gases in practically stoichiometric ratio across γ-$Al_2O_3$ as the catalyst in the presence of a sulfur-containing compound which effects conversion of this catalyst into aluminium nitride.

2. Process according claim 1 consisting in carrying out the reaction at temperatures between 900° and 1 100 °C.

3. Process according the claims 1 and 2, consisting in the steps of adding to the initial gases the sulfur-containing compound in a quantity up to 15 % by volume referred to sulfur.

4. Process for the production of aluminium nitride by reacting of amonia with hydrocarbons f. i. methane at temperatures of between 900° and 1 300 °C in the presence of aluminium-containing catalysts for reacting, and consisting in supplying these gases in a practically stoichiometric ratio across γ-$Al_2O_3$ as the catalyst at the above mentioned temperatures preferably between 900° and 1 100 °C in the presence of a sulfur-containing compound.

**Revendications**

1. Un procédé pour la production d'acide hydrocyanique moyennant la réaction d'ammoniaque avec des hydrocarbures tels que le méthane, à des températures comprises entre 900 et 1 300 °C, sur des catalyseurs contenant de l'aluminium, caractérisé en ce que, avec formation simultanée d'azoture d'aluminium, ces gaz sont passés, en une proportion pratiquement stœchiométrique, au-dessus de γ-$Al_2O_3$ comme catalyseur et en présence d'un composé de soufre accomplissant la transformation de ce catalyseur en azoture d'aluminium.

2. Un procédé d'après la revendication 1, caractérisé en ce que la réaction se déroule à des températures comprises entre 900 et 1 100 °C.

3. Un procédé d'après les revendications 1 et 2, caractérisé en ce qu'on ajoute aux gaz originaux ledit composé de soufre en des volumes allant jusqu'à 15 % vol. rapportés au soufre.

4. Un procédé pour la production d'azoture d'aluminium moyennant la réaction d'ammoniaque avec des hydrocarbures tels que le méthane, à des températures comprises entre 900 et 1 300 °C, en utilisant des catalyseurs contenant de l'aluminium, caractérisé en ce que ces gaz sont transformés, en une proportion pratiquement stœchiométrique, au-dessus de γ-$Al_2O_3$ comme catalyseur, et aux températures précitées, de préférence entre 900 et 1 100 °C, en présence d'un composé de soufre.